# EUROPÄISCHE PATENTSCHRIFT

(11) **EP 1 810 442 B1**
(45) Veröffentlichungstag und Bekanntmachung des Hinweises auf die Patenterteilung: **02.05.2012**
(21) Anmeldenummer: 05808377.5
(22) Anmeldetag: 11.11.2005
(51) Int. Cl.: H04L 9/32

(54) **VORRICHTUNG UND VERFAHREN ZUM DETEKTIEREN EINER MANIPULATION EINES INFORMATIONSSIGNALS**
DEVICE AND METHOD FOR DETECTION OF A MANIPULATION OF AN INFORMATION SIGNAL
DISPOSITIF ET PROCEDE POUR DETECTER UNE MANIPULATION D'UN SIGNAL D'INFORMATION

(30) Priorität: 11.11.2004 DE 102004054549
(43) Veröffentlichungstag der Anmeldung: 25.07.2007
(73) Patentinhaber: Fraunhofer-Gesellschaft zur Förderung der angewandten Forschung e.V., 80686 München (DE)
(72) Erfinder: KULESSA, Ralph, 91161 Hilpoltstein (DE); PICKEL, Jörg, 91224 Pommelsbrunn (DE); KRÄGELOH, Stefan, 91056 Erlangen (DE); AICHROTH, Patrick, 99084 Erfurt (DE); SIEBENHAAR, Frank, 90401 Nürnberg (DE); NEUBAUER, Christian, 90408 Nürnberg (DE); SPINNLER, Wolfgang, 91054 Erlangen (DE)
(74) Vertreter: Zinkler, Franz
(86) Internationale Anmeldenummer: PCT/EP2005/012114
(87) Internationale Veröffentlichungsnummer: WO 2006/050973

(56) Entgegenhaltungen:
- US-A1- 2002 178 368
- US-A1- 2004 128 511
- SCHNEIDER M ET AL: "A robust content based digital signature for image authentication" 16. September 1996 (1996-09-16), PROCEEDINGS OF THE INTERNATIONAL CONFERENCE ON IMAGE PROCESSING (ICIP) LAUSANNE, SEPT. 16 - 19, 1996, NEW YORK, IEEE, US, PAGE(S) 227-230 , XP010202372 ISBN: 0-7803-3259-8 Seite 228 - Seite 229

## Beschreibung

Die vorliegende Erfindung bezieht sich auf Überprüfung der Integrität von Informationssignalen.

Mit steter Verbreitung von modernen Kommunikationsmedien wächst die Bedeutung von Konzepten, die die Informationssignale gegen eine unerlaubte Manipulation schützen bzw. eine Manipulation aufdecken.

Handelt es sich bei den Informationssignalen beispielsweise um digitale Audio- oder Videosignale, so werden oft sorgenannte Wasserzeichen verwendet, um die Daten beispielsweise mit Kopierschutz zu versehen. Die Wasserzeichen werden beispielsweise mit dem Informationssignal "verwoben", so dass ein Entfernen des Wasserzeichens, um z.B. den Kopierschutz zu beseitigen, zwangsläufig digitale Spuren hinterlassen kann, die detektierbar sind. Um selbst im Falle eines erfolgreichen Entfernens des Wasserzeichens eine Vervielfältigung der Daten zu verhindern, ist es auch notwendig, die Daten auf Integrität zu prüfen, um eine mögliche Manipulation zu erkennen.

Die bekannten Ansätze zur Integritätsprüfung der Informationssignale basieren darauf, die kompletten Daten durch ein kryptographisches Hash-Verfahren zu verschlüsseln. Die kryptographischen Hash-Werte werden oft auch als Prüfsumme bezeichnet. Sie berechnen sich aus einem Eingabewert unbestimmter Länge und definieren eindeutig einen bestimmten Ausgabewert, den sogenannten Hash (z. B. ein String von 20 Byte). Dabei besteht die Eigenart der Hash-Funktion darin, zu jedem beliebigen Eingabewert einen eindeutig zugeordneten Ausgabewert zu bestimmen, aus dem sich der Eingabewert nicht zurückrechnen lässt.

Die komplette Datenmenge wird zunächst mit dem Hash-Algorithmus bearbeitet, also der Hash der Datenmenge gebildet. Zur späteren Integritätsprüfung wird die zu testende Datenmenge wieder komplett mit dem Hash-Algorithmus bearbeitet. Liefert sie den selben Hash wie beim Referenzdurchlauf, so darf angenommen werden, dass keine Veränderungen am Datensatz vorgenommen wurden.

Die Anforderungen an Hash-Funktionen lassen sich im Wesentlichen auf drei Punkte festlegen:
- Jeder Hash-Wert muss gleich oft vorkommen, d.h. die Wahrscheinlichkeit von Hash-Werten darf sich bei verschiedenen Eingabewerten nicht unterscheiden.
- Eine Änderung des Eingabewertes sollen zu einem geänderten Hash-Wert führen.
- Der Aufwand, Kollisionen zu erzeugen, soll sehr hoch sein, d.h. zu einem gegebenen Eingabewert soll es möglich schwer sein, einen zweiten mit gleichem Hash-Wert zu finden.

Eine Hash-Funktion, die alle drei Anforderungen erfüllt, wird auch eine kryptographische Hash-Funktion genannt. Zu den wichtigsten Hash-Funktionen zählen SHA-1, MD4, MD5 sowie RIPE-MD160.

Die kryptographische Hash-Funktion SHA-1 verarbeitet Blöcke der Länge 512 Bit und generiert dabei 160 Bits Hash-Werte. Eine wichtige Rolle spielen die 532 Bit-Variablen (Kettenvariablen) sowie die sogenannte Kompressionsfunktion.

Zuerst wird der Eingabewert in Blöcke der Länge 512 Bit aufgeteilt. Anschließend nimmt die Kompressionsfunktion die fünf Kettenvariablen sowie einen 512 Bit-Block auf und bildet diese auf die nächsten 532-Bit-Werte ab. Die Funktion läuft in vier Runden zu je 20 identischen Operationen ab, bei denen die einzelnen Bits nach vordefinierten Rechenoperationen verschoben werden. Abschließend wird der Inhalt der fünf Kettenvariablen als Hash-Wert ausgegeben. Die Verwendung von Hash-Verfahren zur Integritätsprüfung wird z. B. in Open Mobil Alliance, OMA DRM Spezifikation V2.0, Draft Version 2.0-10. April 2004 beschrieben.

Nachteilig an den bekannten Ansätzen ist, dass standardmäßig ein kompletter Datensatz, das heißt das gesamte Informationssignal, getestet wird, was mit einer hohen Komplexität verbunden ist. Darüber hinaus kann so keinerlei nachträgliche Änderung an dem Datensatz vorgenommen werden, beispielsweise Hinzufügung eines oder mehrerer Wasserzeichen, ohne die Integrität des Datensatzes zu zerstören, selbst wenn nur bestimmte Datensatzkomponenten verändert werden.

Die Fachveröffentlichung von Schneider u.a., "A Robust Content Based Digital Signature for Image Authentication", 16. September 1996, Proceedings of the International Conference on Image Processing (ICIT), Lausanne, 16. - 19. September 1996 offenbart zur Erzeugung einer Inhalts-basierten Signatur eine Inhaltsextraktion und eine anschließende Hash-Bildung des Ergebnisses der Extraktion mit anschließender Verschlüsselung, um eine Inhalts-basierte digitale Signatur zu erhalten. Zur Verifikation wird die selbe Inhaltsextraktion eines Testbildes vorgenommen, wird wieder ein Hash ausgeführt und wird dieser Hash dann mit einer entschlüsselten Signatur, die zusammen mit dem Bild geliefert wird, zu Verifikationszwecken verglichen. Zur Inhaltsextraktion wird ein Intensitätshistogramm für jeden Block einer Mehrzahl von Blöcken, in die ein Bild aufgeteilt wird, verwendet.

Die US-Patentveröffentlichung 2002/0178368 A1 offenbart ein semi-fragiles Wasserzeichensystem für eine MPEG-Video-Authentisierung. Ein semi-fragiles Wasserzeichen umfasst eine fragile Wasserzeichenkomponente und eine robuste Wasserzeichenkomponente. Zum Erzeugen des fragilen Wasserzeichens werden aus dem Videostrom Merkmale extrahiert und anschließend einer Hash-Verarbeitung unterzogen. Das fragile Wasserzeichen ist das verschlüsselte Ergebnis einer Hash-Verarbeitung von quantisierten DCT-Koeffizienten.

Die US-Patentveröffentlichung US 2004/0128511 A1 offenbart Verfahren und Systeme zum Erzeugen einer Multimediasignatur. Hierzu werden invariante Merkmale aus dem Multimediainhalt extrahiert und es werden bestimmte Attribute berechnet. Zu diesem Zweck wird der Multimediainhalt quantisiert und es werden die invarianten Merkmale aus dem quantisierten Multimediainhalt extrahiert. Die extrahierten invarianten Merkmale sowie die quantisierten Multimediadaten werden verschlüsselt, um eine digitale Signatur zu erzeugen. Die extrahierten Merkmale sind Eckpunkte, Mittelwerte von Blöcken und Histogramme, die aus Bildern zu extrahieren sind, um robuste Signaturen zu erzeugen.

Es ist die Aufgabe der vorliegenden Erfindung ein Konzept zur Integritätsprüfung von Daten zu schaffen, das eine reduzierte Komplexität aufweist und das eine Integritätsprüfung der Daten auch nach Bearbeitung von Datenkomponenten erlaubt.

Diese Aufgabe wird durch eine Vorrichtung gemäß Anspruch 1 oder durch eine Vorrichtung gemäß Anspruch 13 oder durch eine Vorrichtung gemäß Anspruch 15 oder durch ein Verfahren gemäß Anspruch 18 oder durch ein Verfahren gemäß Anspruch 19 oder durch ein Verfahren gemäß Anspruch 20 oder durch ein Computerprogramm gemäß Anspruch 21 gelöst.

Die Erfindung basiert auf der Erkenntnis, dass eine Vielzahl von Informationssignalen, die mit verschiedenen Anwendungen verbunden sind, z. B. Video- oder Audiosignale, eine für das Informationssignal charakteristische Information aufweisen, die zum Sichern eines Datensatzes gegen Manipulation bei gleichzeitiger Zulassung nicht-charakteristischer Änderungen am Datensatz herangezogen werden kann.

Handelt es sich bei dem Informationssignal beispielsweise um eine MP3-codierte Datei, so soll während der Prüfung der MP3-codierten Audiodatei auf Integrität, um z. B. Manipulationen aufdecken zu können, die Datei noch als unverändert erkannt werden, wenn beispielsweise mittels Bitstream-Watermarking ein Wasserzeichen hinzugefügt wurde. Manipulationen am File, die die charakteristik des Stückes verändern oder gar auf einem Austausch des Stückes (oder von Teilen des Stückes) hinauslaufen, sollen jedoch eindeutig erkannt werden. Gemäß der vorliegenden Erfindung wird, um z.B. eine nachträglich Hinzufügung von Wasserzeichen zu ermöglichen, eine dem Informationssignal, in diesem Beispiel der MP3-codierten Audiodatei, inhärente und charakteristische Information als Sensor verwendet.

Zunächst muss jedoch die charakteristische Information eines Datensatzes, d.h. eines Informationssignals, ermittelt werden. Dieser Schritt kann abhängig von einer Art und Anwendung des Datensatzes definiert werden und bedarf im einfachsten Fall einer Ausmaskierung nicht-charakteristischer Teile, eventuell auch einer Filterung oder Transformation des Datensatzes, um die charakteristische Information zu gewinnen. Bei einem MP3-codierten Musikstück ist es z. B. ausreichend, die Seiteninformation bzw. nur einen Teil der Seiteninformation zu extrahieren, ohne die Spektraldaten zu berücksichtigen, die die Hauptinformation bilden, wobei die Seiteninformation mit der Hauptinformation zusammenhängt und z.B. Skalenfaktoren für die Spektraldaten umfasst. Wird den Spektraldaten beispielsweise ein Wasserzeichen hinzugefügt, so ändert dies nichts an der charakteristischen Information. Die Integrität des Informationssignals wird, im erfindungsgemäßen Sinne, nicht beeinträchtigt.

In einem zweiten Schritt wird dann die Integrität von ausschließlich der charakteristischen Information mit einem kryptographischen Verfahren gesichert bzw. getestet, wobei für das kryptographische Verfahren beispielsweise das bereits erwähnte Hash-Verfahren herangezogen werden kann.

Im Beispiel des MP3-Datenstroms können z. B. die Skalenfaktoren, die mit den Spektraldaten zusammenhängen, als charakteristische Information ausgenutzt werden, so dass beispielsweise das Hash-Verfahren nur auf die Skalenfaktoren angewendet wird, d.h. dass der Hash-Wert nur über die Skalenfaktoren berechnet wird. Wird nun Bitstream-Watermarking angewandt, so verändern sich die Spektralwerte, jedoch nicht die Skalenfaktoren (Skalenparameter). Eine spätere Überprüfung des Hash liefert also Übereinstimmung, falls keine Manipulation des Datensatzes (des Informationssignals) vorliegt. Dies reicht beispielsweise aus, um zu verhindern, dass ein anderes Stück untergeschoben werden kann.

Im Gegensatz zum Stand der Technik, bei dem eine Integritätsprüfung der kompletten Datei durch ein kryptographisches Hash-Verfahren ohne Berücksichtigung von charakteristischen Informationen durchgeführt wird, basiert die vorliegende Erfindung auf einem Sichern eines Datensatzes gegen Manipulation seiner charakteristischen Information bei gleichzeitiger Zulassung nicht-charakteristischer Änderungen am Datensatz.

Zur Integritätsprüfung eines Datensatzes kann z. B. ein kryptographisches Hash-Verfahren, z. B. SHA-1, verwendet werden. Es dient dazu, eine Eins-Zu-Eins-Übereinstimmung zwischen einer Referenz (Original) und einem zu vergleichenden Datensatz (Kopie) zu prüfen. Ergebnis der Prüfung ist entweder "identisch" oder "Abweichung irgendeiner Art".

Wie es bereits erwähnt worden ist, ist es manchmal erwünscht, spezifische Änderungen in einem Datensatz zuzulassen, beispielsweise durch Hinzufügung eines Wasserzeichens, und trotzdem prüfen zu können, dass die charakteristische Information unverändert vorhanden ist, d.h., dass es sich im Kern noch um den Originaldatensatz, d.h. um den ursprünglichen, nicht-manipulierten Datensatz, handelt. Erfindungsgemäß wird die charakteristische Information eines Datensatzes auf Integrität geprüft. Was "charakteristische Information" ist, kann je nach Anwendungsfall definiert werden. Ein Beispiel hierzu ist ein MP3-codiertes Musikstück, dem, wie es oben beschrieben worden ist, nach einer Bestimmung der Integritätsinformation, mittels Bitstream-Watermarking ein Wasserzeichen hinzugefügt werden soll. Die Spektralwerte des Stückes ändern sich (geringfügig), die Skalenfaktoren und andere Seiteninformationen bleiben aber gleich und unterscheiden das Stück von anderen Musikstücken. Die charakteristische Information bleibt daher erhalten.

Erfindungsgemäß kann daher ein MP3-codiertes Musikstück noch als unverändert erkannt werden, wenn es mit Bitstream-Watermarking behandelt wurde. Die Integrität charakteristischer Information eines Datensatzes wird geprüft, Änderungen am Datensatz, die die charakteristische Information nicht verändern, werden jedoch zugelassen.

In MP3-codierten Musikstücken wird durch die Verwendung von Bitstream-Watermarking die Integrität der charakteristischen Informationssignalteile, die die charakteristische Information umfassen, nicht gestört. Damit wird erreicht, dass das Original nicht durch ein anderes Stück oder Teile eines anderen Stückes ersetzt werden kann, was beispielsweise wichtig für DRM-Anwendungen ist, wobei die nicht-charakteristische Information trotzdem verändert werden darf.

Durch die Möglichkeit, die charakteristische Information eines Datensatzes gezielt auf Integrität testen zu können, kann somit eine nicht-charakteristische Information verändert werden, ohne die Integrität zu verändern. So kann beispielsweise im Falle einer MP3-codierten Datei ein Wasserzeichen mittels Bitstream-Watermarking hinzugefügt werden, ohne dass dies die Integrität der Datei im erfindungsgemäßen Sinne verändert wird, d.h. beispielsweise ohne dass das erfindungsgemäße Hash-Verfahren eine Abweichung zum Original meldet.

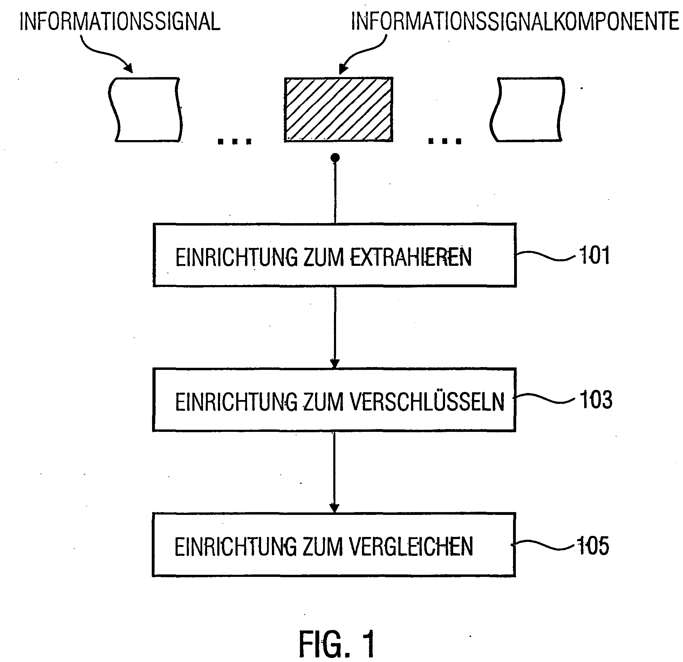

Weitere Ausführungsbeispiele der vorliegenden Erfindung werden anhand von Fig. 1 beschrieben, die ein Blockschaltbild einer Vorrichtung zum Detektieren einer Manipulation eines Informationssignals gemäß einem Ausführungsbeispiel der vorliegenden Erfindung zeigt.

Die in Fig. 1 dargestellte Vorrichtung umfasst eine Einrichtung 101 zum Extrahieren, deren Ausgang mit einem Eingang einer Einrichtung 103 zum Verschlüsseln gekoppelt ist. Die Einrichtung 103 zum Verschlüsseln umfasst einen Ausgang, der mit einem Eingang einer Einrichtung 105 zum Vergleichen gekoppelt ist.

Wie es in Fig. 1 dargestellt ist, umfasst das Informationssignal eine Informationssignalkomponente, die für das Informationssignal charakteristisch ist. Die Einrichtung 101 zum Extrahieren ist ausgebildet, um die Informationssignalkomponente zu extrahieren, und um die Informationssignalkomponente der Einrichtung 103 zum Verschlüsseln zur Verfügung zu stellen. Die Einrichtung 103 zum Verschlüsseln ist ausgebildet, um die Informationskomponente beispielsweise unter Verwendung eines kryptographischen Verfahrens zu verschlüsseln, um ein verschlüsseltes Signal zu erhalten.

Die Einrichtung 105 zum Vergleichen ist ausgebildet, um das verschlüsselte Signal von der Einrichtung 103 zum Verschlüsseln zu empfangen, und um das verschlüsselte Signal mit einem Referenzsignal zu vergleichen, wobei das Referenzsignal eine verschlüsselte Darstellung einer nicht-manipulierten Referenzsignalkomponente eines Referenzinformationssignals ist, um die Manipulation des Informationssignals zu detektieren, falls das Informationssignal manipuliert worden ist.

Im Falle einer detektierten Manipulation kann die Einrichtung 105 zum Vergleichen über einen Ausgang ein Kontrollsignal liefern, das eine Manipulation des an einem Eingang der Einrichtung 101 zum Extrahieren anliegenden Informationssignals anzeigt.

Erfindungsgemäß kann die Einrichtung 101 zum Extrahieren ausgebildet sein, um eine weitere Informationssignalkomponente oder um weitere Informationssignalkomponenten des Informationssignals nicht herauszufiltern, so dass eine Änderung der weiteren Informationskomponenten nicht detektierbar ist. Wird beispielsweise ein Wasserzeichen den anderen Komponenten des Informationssignals hinzugefügt, so soll diese Änderung des Informationssignals erfindungsgemäß nicht dazu führen, dass eine Manipulation detektiert wird, da erfindungsgemäß zulässige Änderungen des Datensatzes nicht detektierbar sein sollten, um die Integritätsprüfung nicht zu stören.

Damit das Informationssignal nach einer Prüfung auf Integrität unverändert weiterverarbeitet werden kann, wenn keine Manipulation vorliegt, handelt es sich bei dem Informationssignal, das der Einrichtung 101 zum Extrahieren bearbeitet, beispielsweise um eine Kopie des Informationssignals, die von der Einrichtung 101 zum Extrahieren zunächst erzeugt wird. Somit können die weiteren Informationssignalkomponenten von der Einrichtung 101 zum Extrahieren ausmaskiert oder unterdrückt werden, so dass nur die Informationssignalkomponenten mit der charakteristischen Information durchgelassen werden, ohne das Informationssignal selbst zu zerstören.

Gemäß einem weiteren Aspekt der vorliegenden Erfindung ist die Einrichtung 101 zum Extrahieren ausgebildet, um die Informationssignalkomponente in dem Informationssignal zu detektieren, und um eine Kopie der Informationssignalkomponente zu extrahieren, um die Informationssignalskomponente zu erhalten.

Wie es bereits erwähnt worden ist, kann das Informationssignal eine weitere Informationssignalkomponente umfassen. Beispielsweise umfasst die weitere Informationssignalkomponente eine Hauptinformation, z.B. Nutzdaten. Als charakteristische Information kann es sich beilspielsweise um eine Seiteninformation, die mit der Hauptinformation zusammenhängt, handeln, wobei die Seiteninformation in der Informationssignalkomponente enthalten ist, die von der Einrichtung 101 extrahiert werden soll.

Gemäß einem Aspekt der vorliegenden Erfindung können die Informationssignalkomponente und die weitere Informationssignalkomponente in unterschiedlichen Abschnitten des Informationssignals angeordnet sein. Liegt das Informationssignal z.B. in Form eines Datenrahmens vor, so kann die Informationssignalkomponente beispielsweise an einer anderen Stelle des Datenrahmens angeordnet sein als die weitere Informationssignalkomponente. Anders ausgedrückt, sind die beiden Komponenten innerhalb des Informationssignals voneinander beabstandet. In diesem Fall ist die Einrichtung 101 zum Extrahieren ausgebildet, um den Abschnitt des Informationssignals zu extrahieren, in dem die Informationssignalkomponente angeordnet ist.

Weist jedoch ein Spektrum der Informationssignalkomponente unterschiedliche Spektralwerte auf als ein "Spektrum der weiteren Informationssignalkomponente, so kann die Einrichtung 101 zum Extrahieren ausgebildet sein, um die Spektralwerte der Informationssignalkomponente herauszufiltern, um die Informationssignalkomponente zu erhalten. Die Spektralwerte der weiteren Informationssignalkomponente können beispielsweise unterdrückt werden. Hierzu kann die Einrichtung 101 zum Extrahieren ein Filter umfassen oder selbst als ein Filter ausgebildet sein, um die Spektralwerte, die mit der Informationssignalkomponente zusammenhängen, zu extrahieren. Darüber hinaus kann die Einrichtung 101 zum Extrahieren ausgebildet sein, um eine Spektralanalyse durchzuführen, um die Spektralwerte des Spektrums der informationssignalkomponente herauszufiltern. Beispielsweise umfasst die Einrichtung 101 zum Extrahieren hierzu einen Fourier-Transformator, der ausgebildet ist, um eine Fourier-Transformierte des Informationssignals zu bilden, die Spektralwerte der weiteren Informationssignalkomponente in der Fourier-Transformation zu Null zu setzen und um das Ergebnis wieder in den Zeitbereich zu transformieren, um die Informationssignalkomponente zu erhalten.

An dieser Stelle soll angemerkt werden, dass eine Filterung sowohl dann durchgeführt werden kann, wenn die Informationssignalkomponente und die weitere Informationssignalkomponente überlagert sind, als auch dann, die Informationssignalkomponente und die weitere Informationssignalkomponente voneinander beabstandet sind und unterschiedliche Spektralbereiche belegen.

Handelt es sich bei dem Informationssignal um beispielsweise ein Audiosignal, beispielsweise ein MPEG-Signal, so kann die weitere Informationssignalkomponente als Hauptinformation Audiospektralwerte, die beispielsweise codiert sind, umfassen, wobei die den Audiospektralwerten zugeordneten Skalenparameter als Seiteninformation (charakteristische Information) von der Informationssignalkomponente umfasst sind.

Bei der Seiteninformation kann es sich jedoch um eine Information über eine Anzahl der Audiospektralwerte, d.h. um eine Information bezüglich der Verteilung der Blocklänge, handeln (Block Switching-Informationen), die eine Verteilung zwischen kurzen Blöcken und langen Blöcken (Short-Blocks, Long-Blocks) liefert.

Handelt es sich bei dem Informationssignal um ein Videosignal, so kann die weitere Informationssignalkomponente als Hauptinformation Videoinformationen umfassen, wobei die Informationssignalkomponente als weitere Information beispielsweise Luminanzwerte für die Videoinformation umfasst.

Die Informationssignalkomponente wird der Einrichtung 103 zum Verschlüsseln zur Verfügung gestellt, um durch Verschlüsseln der Informationssignalkomponente unter Verwendung von kryptographischen Verfahren ein verschlüsseltes Signal zu erhalten. Die Einrichtung 103 zum Verschlüsseln kann beispielsweise ausgebildet sein, um einen Hash-Wert über die Informationssignalkomponente zu bilden, um das verschlüsselte Signal zu erhalten. Die Einrichtung 103 zum Verschlüsseln kann ferner ausgebildet sein, um eine Prüfsumme über die Informationssignalkomponente zu bilden.

Gemäß einem weiteren Aspekt kann die Einrichtung 103 zum Verschlüsseln ausgebildet sein, um die Informationssignalkomponente unter Verwendung von beispielsweise des RSA-Algorithmus unter Heranziehung eines privaten oder öffentlichen Schlüssels zu verschlüsseln. Die Einrichtung 103 zum Verschlüsseln kann jedoch ausgebildet sein, um jedes andere bekannte nicht-symmetrische oder symmetrische Verschlüsselungsverfahren zu verwenden, um das verschlüsselte Signal zu erhalten.

Erfindungsgemäß wird das verschlüsselte Signal mit einem Referenzsignal verglichen. Das Referenzsignal kann beispielsweise von dem Informationssignal umfasst sein. In diesem Fall ist die Einrichtung 101 zum Extrahieren ferner ausgebildet, um das Referenzsignal aus dem Informationssignal zu extrahieren. Ist das Referenzsignal an einer bestimmten Stelle des Informationssignals angeordnet, so wird der entsprechende Abschnitt des Informationssignals, der das Referenzsignal umfasst, extrahiert. Das Referenzsignal kann jedoch ein Spektrum mit spezifischen Referenzspektralwerten umfassen, so dass die Einrichtung 101 zum Extrahieren, in Analogie zu den obigen Ausführungen, die Referenzspektralwerte herausfiltern kann, um das Referenzsignal zu extrahieren.

Ist das Referenzsignal nicht in dem Informationssignal enthalten, so kann die Einrichtung zum Extrahieren ausgebildet sein, um ein Referenzsignal, das der Informationssignalkomponente zugeordnet ist, aus einer Mehrzahl von Referenzsignalen auszuwählen. Die Referenzsignale können beispielsweise für jede denkbare Informationssignalkomponente in einem Speicher abgelegt sein, so dass anhand der extrahierten Informationssignalkomponente, die die charakteristische Information umfasst, ein Referenzsignal, das beispielsweise mit der charakteristischen Information verknüpft und mit dieser daher zusammenhängt, ausgewählt wird.

Bei dem Referenzsignal kann es sich um einen Hash-Wert oder um eine Prüfsumme über eine nicht-manipulierte Informationssignalkomponente handeln. Generell kann es sich bei dem Informationssignal um ein Ergebnis einer kryptographischen Verschlüsselung einer nicht-manipulierten Referenzsignalkomponente handeln, wobei beispielsweise die oben erwähnten kryptographischen Verfahren herangezogen werden.

Die nicht-manipulierte "Referenzsignalkomponente ist beispielsweise identisch mit der ursprünglichen Informationssignalkomponente. Analog kann das Referenzsignal identisch mit dem ursprünglichen, d.h. mit dem nicht-manipulierten Informationssignal sein.

Die obigen Ausführungsbeispiele beziehen sich auf den Fall, dass die Informationssignalkomponente verschlüsselt wird, um die Datenintegrität zu überprüfen. Erfindungsgemäß ist es jedoch denkbar, dass die Informationssignalkomponente, die für das Informationssignal charakteristisch ist, mit einem entschlüsselten Signal verglichen wird, um das Informationssignal auf Integrität zu überprüfen, wobei das entschlüsselte Signal aus einer kryptographischen Entschlüsselung eines Referenzsignals hervorgeht.

Gemäß einem weiteren Aspekt liefert die Erfindung eine Vorrichtung zum Detektieren einer Manipulation eines Informationssignals mit einer Einrichtung zum Extrahieren einer Informationssignalkomponente, die für das Informationssignal charakteristisch ist aus dem Informationssignal, wobei die Einrichtung zum Extrahieren mit der bereits beschriebenen Einrichtung 101 zum Extrahieren identisch sein kann.

Die Vorrichtung umfasst ferner eine Einrichtung zum Entschlüsseln eines Referenzsignals, wobei das Referenzsignal eine verschlüsselte Darstellung einer nicht-manipulierten Referenzsignalsignalkomponente eines Referenzinformationssignals ist, um ein entschlüsseltes Signal zu erhalten.

Die Vorrichtung umfasst ferner eine Einrichtung zum Vergleichen des entschlüsselten Signals mit der Informationssignalkomponente.

Bei dem Referenzsignal, das beispielsweise von dem Informationssignal umfasst ist und von der Einrichtung zum Extrahieren mitextrahiert wird, handelt es sich beispielsweise um eine verschlüsselte Darstellung der ursprünglichen Informationssignalkomponente eines ursprünglichen Informationssignals.

Handelt es sich bei dem Informationssignal beispielsweise um eine unter Verwendung eines privaten Schlüssels erzeugte digitale Signatur über die Informationssignalkomponente, so kann die Einrichtung zum Entschlüsseln ausgebildet sein, um die Signatur mit einem öffentlichen Schlüssel, der mit dem privaten Schlüssel zusammenhängt, zu entschlüsseln, um das entschlüsselte Signal zu erhalten.

Gemäß einem weiteren Aspekt kann es sich bei dem Referenzsignal um ein Signal handeln, das unter Verwendung eines beliebigen symmetrischen oder nicht-symmetrischen Verschlüsselungsverfahren verschlüsselt worden ist, wobei, im Falle eines nicht-symmetrischen Verfahrens, ein privater Schlüssel eingesetzt worden ist. Das Referenzsignal kann nun empfangsseitig mit einem öffentlichen Schlüssel entschlüsselt werden, um eine entschlüsselte Fassung der Informationssignalkomponente zu erhalten. Nach einem Vergleich der empfangenen Informationssignalkomponente mit der entschlüsselten Fassung kann nun festgestellt werden, ob eine Manipulation des Informationssignals vorliegt.

Gemäß einem weiteren Aspekt liefert die vorliegende Erfindung eine Vorrichtung zum Erzeugen eines Informationssignals aus einem Eingangssignal, wobei das Eingangssignal eine Eingangssignalkomponente und eine weitere Eingangssignalkomponente umfasst, wobei die weitere Eingangssignalkomponente eine Hauptinformation umfasst und wobei die Eingangssignalkomponente eine Seiteninformation umfasst, die mit der Hauptinformation zusammenhängt. Die Eingangssignalkomponente entspricht beispielsweise der bereits erwähnten Informationssignalkomponente und die weitere Eingangssignalkomponente entspricht beispielsweise der weiteren Informationssignalkomponente.

Die Vorrichtung zum Erzeugen des Informationssignals umfasst eine Einrichtung zum Verschlüsseln der Eingangsignalkomponente, um ein Referenzsignal zu erhalten. Darüber hinaus umfasst die Vorrichtung zum Erzeugen eine Einrichtung zum Zusammensetzen der Empfangssignalkomponente, der weiteren Empfangssignalkomponente und des Referenzsignals, um das Informationssignal zu erzeugen.

Gemäß einem Aspekt der vorliegenden Erfindung ist die Einrichtung zum Verschlüsseln ausgebildet, um die Eingangssignalkomponente, die beispielsweise das für das Informationssignal oder für die Informationssignalart charakteristische Information umfasst, unter Verwendung eines kryptographischen Verfahrens, wie sie beispielsweise oben stehend erwähnt worden sind, zu verschlüsseln. Z. B. kann die Einrichtung zum Verschlüsseln ausgebildet sein, um die Eingangssignalkomponente mit Hilfe eines nicht-symmetrischen Verschlüsselungsverfahrens unter Verwendung eines privaten Schlüssels zu verschlüsseln, wobei das Referenzsignal, wie es oben stehend beschrieben worden ist, beispielsweise unter Verwendung des öffentlichen Schlüssels entschlüsselt werden kann.

Die Einrichtung zum Verschlüsseln kann jedoch ausgebildet sein, um einen Hash-Wert oder um eine Prüfsumme über die Eingangssignalkomponente zu bilden, um das Referenzsignal zu erhalten.

Die Einrichtung zum Zusammensetzen kann beispielsweise ausgebildet sein, um das Referenzsignal an das Eingangssignal anzufügen, um das Informationssignal zu erzeugen. Die Einrichtung zum Zusammensetzen kann jedoch ausgebildet sein, um das Referenzsignal dem Eingangssignal beispielsweise zu überlagern, wobei das Referenzsignal und das Eingangssignal vorzugsweise unterschiedliche Spektralbereiche aufweisen. Die Einrichtung zum Zusammensetzen kann jedoch ausgebildet sein, um das Referenzsignal an einer beliebigen Stelle des Eingangssignals anzuordnen.

Erfindungsgemäß ist es nun möglich, die Integrität der charakteristischen Information eines Datensatzes zu testen. Werden nun Änderungen an der nicht-charakteristischen Information eines Datensatzes durchgeführt, so liefert der Integritätstest immer noch die Aussage identisch. So kann beispielsweise die oben stehend erwähnte Hauptinformation weiterverarbeitet sein, ohne dass die Informationssignalkomponente bzw. Eingangssignalkomponente verändert wird. Beispielsweise kann der weiteren Informationssignalkomponente bzw. der weiteren Eingangssignalkomponente Wasserzeichen hinzugefügt werden, ohne dass dies einen Einfluss auf die Integrität der Daten hat.

Wie es oben stehend beschrieben worden ist, wird in einem ersten Schritt die charakteristische Information für den gewünschten Anwendungsfall z. B. mit Hilfe eines Filters extrahiert. Bei MP3-codierten Signalen kann dieses Filter z. B. alle Hoffmann-Code-Werte (Spektrallinien, Spektralwerte) ausmaskieren, also andere Bits durchlassen. Filter verschiedenster Art sind denkbar, sowohl welche die einfache Teile ausmaskieren als auch komplizierte Filteroperationen durchführen. So kann z. B. bei einem Textdokument nur Text ohne Formatierungen herausgefiltert werden. Handelt es sich um ein Bild, so wird z. B. nur Luminanz und keine Farbe extrahiert etc.

In einem weiteren Schritt wird die gewonnene charakteristische Information (die Ausgabe des Filters) mit einem gewöhnlichen kryptographischen Verfahren, z. B. mit einem kryptographischen Hash-Verfahren bearbeitet/getestet.

Handelt es sich bei dem Informationssignal bzw. Eingangssignal um ein MP3-codiertes Signal, so wird dieses so weit decodiert, dass der Bereich ermittelt werden kann, in dem Skalenfaktoren als Seiteninformation gespeichert sind. Der Hash-Algorithmus wird nun auf die Skalenfaktoren des Datensatzes angewendet und der entstehende Hash-Wert als Referenz gespeichert, wobei die Spektralwerte unberücksichtigt bleiben.

Nun kann dem Signal beliebig oft ein Wasserzeichen mittels eines geeigneten Bitstream-Watermarking-Verfahrens hinzugefügt werden. Zum Test, ob die charakteristische Information verändert ist, wird erneut der Bereich der Skalenfaktoren (Skalenparameter) ermittelt (Informationssignalkomponente), der Hash über die Skalenfaktoren errechnet und mit dem Referenz verglichen, wie es oben stehend beschrieben worden ist. Ist die charakteristische Information unverändert, so ist der Hash gleich.

Andere Möglichkeiten, charakteristische Informationen für MP3-codierte Signale zu definieren, sind z. B. die komplette Seiteninformation, ein bestimmter Teil der Spektralwerte, falls Watermarking nur für den komplementären Teil verwendet, oder die bereits erwähnte Block-Switching-Information (Verteilung Short-Blocks, Long-Blocks).

Die Spektralwerte können beispielsweise mit Skalenfaktoren skaliert sein. Ferner können die Spektralwerte codiert sein, beispielsweise Huffman-codiert sein.

Somit liefert die vorliegende Erfindung unter anderem auch die Möglichkeit, einen Wasserzeichen-verträglichen Hash zu liefern.

Die vorliegende Erfindung liefert neben den beschriebenen Vorrichtungen auch Verfahren mit der entsprechenden Funktionalität. Darüber hinaus sind alle Funktionalitäten der verschiedenen Ausführungsbeispiele miteinander kombinierbar, um weitere vorteilhafte Auswirkungen der vorliegenden Erfindung zu erhalten.

Abhängig von den Gegebenheiten können die erfindungsgemäßen Verfahren in Hardware oder in Software implementiert werden. Die Implementation kann auf einem digitalen Speichermedium, insbesondere eine Diskette oder CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computer-Programm-Produkt mit auf einem maschinenlesbaren Träger gespeicherten Programmcode zur Durchführung von zumindest einem der erfindungsgemäßen Verfahren, wenn das Computer-Programm-Produkt auf einem Rechner abläuft. In anderen Worten ausgedrückt kann die Erfindung somit als ein Computer-Programm mit einem Programmcode zur Durchführung der Verfahren realisiert werden, wenn das Computerprogramm auf einem Computer abläuft.

## Patentansprüche

1. Vorrichtung zum Detektieren einer Manipulation eines Informationssignals, **dadurch gekennzeichnet,**
**dass** das Informationssignal eine Informationssignalkomponente mit Seiteninformationen und eine weitere Informationssignalkomponente mit Hauptinformationen aufweist, wobei die Seiteninformationen mit den Hauptinformationen zusammenhängen, und
**dass** die Vorrichtung folgende Merkmale aufweist:
eine Einrichtung (101) zum Extrahieren der Informationssignalkomponente mit Seiteninformationen, die für das Informationssignal charakteristisch ist, aus dem Informationssignal;
eine Einrichtung (103) zum Verschlüsseln der extrahierten Informationssignalkomponente mit Seiteninformationen, um ein verschlüsseltes Signal zu erhalten; und
eine Einrichtung (105) zum Vergleichen des verschlüsselten Signals mit einem Referenzsignal, wobei das Referenzsignal eine verschlüsselte Darstellung einer nicht-manipulierten Referenzsignalkomponente mit Seiteninformationen eines Referenzinformationssignals ist, um die Manipulation zu detektieren.

2. Vorrichtung gemäß Anspruch 1, wobei die Einrichtung (101) zum Extrahieren ausgebildet ist, um die Informationssignalkomponente mit Hauptinformationen nicht herauszufiltern, so dass eine Änderung der Informationssignalkomponente mit Hauptinformationen nicht detektierbar ist.

3. Vorrichtung gemäß Anspruch 1, wobei die Informationssignalkomponente mit Seiteninformationen und die Informationssignalkomponente mit Hauptinformationen in unterschiedlichen Abschnitten des Informationssignals angeordnet sind, und wobei die Einrichtung (101) zum Extrahieren ausgebildet ist, um den Abschnitt des Informationssignals zu extrahieren, in dem die Informationssignalkomponente mit Seiteninformationen angeordnet ist, um die extrahierte Informationssignalkomponente zu erhalten.

4. Vorrichtung gemäß Anspruch 1, wobei ein Spektrum der Informationssignalkomponente und ein Spektrum der weiteren Informationssignalkomponente unterschiedliche Spektralwerte aufweisen, und wobei die Einrichtung (101) zum Extrahieren ausgebildet ist, um die Spektralwerte der Informationssignalkomponente herauszufiltern, um die Informationssignalkomponente zu erhalten.

5. Vorrichtung gemäß einem der Ansprüche 1 bis 4, wobei das Informationssignal ein Audiosignal ist, wobei die weitere Informationssignalkomponente als Hauptinformationen Audiospektralwerte umfasst, und wobei die Informationssignalkomponente als Seiteninformationen Skalenparameter für die Audiospektralwerte umfasst.

6. Vorrichtung gemäß einem der Ansprüche 1 bis 4, wobei das Informationssignal ein Audiosignal ist, und wobei die weitere Informationssignalkomponente Audiospektralwerte umfasst, und wobei die Informationssignalkomponente Informationen über eine Anzahl der Audiospektralwerte umfasst.

7. Vorrichtung gemäß einem der Ansprüche 1 bis 4, wobei das Informationssignal ein Videosignal ist, wobei die weitere Informationssignalkomponente als Hauptinformationen Videoinformationen umfasst, und wobei die Informationssignalkomponente als Seiteninformationen Luminanzwerte für die Videoinformation umfasst.

8. Vorrichtung gemäß einem der Ansprüche 1 bis 7, wobei die Einrichtung (103) zum Verschlüsseln ausgebildet ist, um einen Hash-Wert oder um eine Prüfsumme über die Informationssignalkomponente zu bilden, um das verschlüsselte Signal zu erhalten.

9. Vorrichtung gemäß einem der Ansprüche 1 bis 8, wobei das Informationssignal ferner das Referenzsignal umfasst, wobei die Einrichtung (101) zum Extrahieren ausgebildet ist, um das Referenzsignal aus dem Informationssignal zu extrahieren.

10. Vorrichtung gemäß Anspruch 9, wobei die Einrichtung (101) zum Extrahieren ausgebildet ist, um eine Referenzsignal, das der Informationssignalkomponente zugeordnet ist, aus einer Mehrzahl von Referenzsignalen auszuwählen.

11. Vorrichtung gemäß Anspruch 9 oder 10, wobei das Referenzsignal ein Hash-Wert oder eine Prüfsumme über die nicht-manipulierte Referenzsignalkomponente ist.

12. Vorrichtung gemäß einem der Ansprüche 1 bis 11, wobei die nicht-manipulierte Referenzsignalkomponente identisch mit der ursprünglichen Informationssignalkomponente ist, und wobei das Referenzsignal identisch mit dem ursprünglichen Informationssignal ist.

13. Vorrichtung zum Detektieren einer Manipulation eines Informationssignals **dadurch gekennzeichnet,**
**dass** das Informationssignal eine Informationssignalkomponente mit Seiteninformationen und eine weitere Informationssignalkomponente mit Hauptinformationen aufweist, wobei die Seiteninformationen mit den Hauptinformationen zusammenhängen, und
**dass** die Vorrichtung folgende Merkmale aufweist:
eine Einrichtung zum Extrahieren der Informationssignalkomponente mit Seiteninformationen, die für das Informationssignal charakteristisch ist, aus dem Informationssignal;
eine Einrichtung zum Entschlüsseln eines Referenzsignals, wobei das Referenzsignal eine verschlüsselte Darstellung einer nicht-manipulierten Referenzsignalkomponente mit Seiteninformationen eines Referenzinformationssignals ist, um ein entschlüsseltes Signal zu erhalten, wobei das Referenzsignal eine weitere Informationssignalkomponente mit Hauptinformationen aufweist, wobei die Seiteninformationen mit den Hauptinformationen zusammenhängen; und
eine Einrichtung zum Vergleichen des entschlüsselten Signals, das entschlüsselte Seiteninformationen des Referenzsignals darstellt, mit der Informationssignalkomponente mit Seiteninformationen, um die Manipulation des Informationssignals zu detektieren.

14. Vorrichtung gemäß Anspruch 13, wobei das Referenzsignal eine unter Verwendung eines privaten Schlüssels erzeugte digitale Signatur über die Informationssignalkomponente ist, und wobei die Einrichtung zum Entschlüsseln ausgebildet ist, um die Signatur mit einem öffentlichen Schlüssel, der mit dem privaten Schlüssel zusammenhängt, zu entschlüsseln, um das entschlüsselte Signal zu erhalten.

15. Vorrichtung zum Erzeugen eines Informationssignals aus einem Eingangssignal, **dadurch gekennzeichnet,**
**dass** das Eingangssignal eine Eingangssignalkomponente, die für das Informationssignal charakteristisch ist, und eine weitere Eingangssignalkomponente umfasst, wobei die weitere Eingangssignalkomponente Hauptinformationen umfasst, und wobei die Eingangssignalkomponente Seiteninformationen umfasst, die mit den Hauptinformationen zusammenhängen, und
**dass** die Vorrichtung folgende Merkmale aufweist:
eine Einrichtung zum Verschlüsseln der Eingangssignalkomponente, die die Seiteninformationen umfasst, um ein Referenzsignal zu erhalten; und
eine Einrichtung zum Zusammensetzen der Eingangssignalkomponente, die die Seiteninformationen umfasst, der weiteren Eingangssignalkomponente, die die Hauptinformationen umfasst, und des Referenzsignals, das die Seiteninformationen in verschlüsselter Form umfasst, um das Informationssignal zu erzeugen.

16. Vorrichtung gemäß Anspruch 15, wobei die Einrichtung zum Verschlüsseln ausgebildet ist, um einen Hash-Wert oder um eine Prüfsumme über die Eingangssignalkomponente zu bilden, um das Referenzsignal zu erhalten.

17. Vorrichtung gemäß Anspruch 15 oder 16, wobei die Einrichtung zum Zusammensetzen ausgebildet ist, um das Referenzsignal an das Eingangssignal anzufügen, um das Informationssignal zu erzeugen.

18. Verfahren zum Detektieren einer Manipulation eines Informationssignals, **dadurch gekennzeichnet,**
**dass** das Informationssignal eine Informationssignalkomponente mit Seiteninformationen und eine weitere Informationssignalkomponente mit Hauptinformationen aufweist, wobei die Seiteninformationen mit den Hauptinformationen zusammenhängen, und
**dass** das Verfahren folgende Schritte aufweist:
Extrahieren der Informationssignalkomponente mit Seiteninformationen, die für das Informationssignal charakteristisch ist, aus dem Informationssignal;
Verschlüsseln der extrahierten Informationssignalkomponente mit Seiteninformationen, um ein verschlüsseltes Signal zu erhalten; und
Vergleichen des verschlüsselten Signals mit einem Referenzsignal, wobei das Referenzsignal eine verschlüsselte Darstellung einer nicht-manipulierten Referenzsignalkomponente mit Seiteninformationen eines Referenzinformationssignals ist, um die Manipulation zu detektieren.

19. Verfahren zum Detektieren einer Manipulation eines Informationssignals, **dadurch gekennzeichnet,**
**dass** das Informationssignal eine Informationssignalkomponente mit Seiteninformationen und eine weitere Informationssignalkomponente mit Hauptinformationen aufweist, wobei die Seiteninformationen mit den Hauptinformationen zusammenhängen, und
**dass** das Verfahren folgende Schritte aufweist:
Extrahieren der Informationssignalkomponente mit Seiteninformationen, die für das Informationssignal charakteristisch ist, aus dem Informationssignal;
Entschlüsseln eines Referenzsignals, wobei das Referenzsignal eine verschlüsselte Darstellung einer nicht-manipulierten Referenzsignalkomponente mit Seiteninformationen eines Referenzinformationssignals ist, um ein entschlüsseltes Signal zu erhalten, wobei das Referenzsignal eine weitere Informationssignalkomponente mit Hauptinformationen aufweist, wobei die Seiteninformationen mit den Hauptinformationen zusammenhängen; und
Vergleichen des entschlüsselten Signals, das entschlüsselte Seiteinformationen des Referenzsignals darstellt, mit der Informationssignalkomponente mit Seiteninformationen, um die Manipulation zu detektieren.

20. Verfahren zum Erzeugen eines Informationssignals aus einem Eingangssignal, **dadurch gekennzeichnet,**
**dass** das Eingangssignal eine Eingangssignalkomponente, die für das Informationssignal charakteristisch ist, und eine weitere Eingangssignalkomponente umfasst, wobei die weitere Eingangssignalkomponente Hauptinformationen umfasst, und wobei die Eingangssignalkomponente Seiteninformationen umfasst, die mit den Hauptinformationen zusammenhängen, und
**dass** das Verfahren folgende Schritte aufweist:
Verschlüsseln der Eingangssignalkomponente, die die Seiteninformationen umfasst, um ein Referenzsignal zu erhalten; und
Zusammensetzen der Eingangssignalkomponente, die die Seiteninformationen umfasst, der weiteren Eingangssignalkomponente, die die Hauptinformationen umfasst, und des Referenzsignals, das die Seiteninformationen in verschlüsselter Form umfasst, um das Informationssignal zu erzeugen.

21. Computer-Programm zum Durchführen des Verfahrens gemäß Anspruch 18 oder des Verfahrens gemäß Anspruch 19 oder des Verfahrens gemäß Anspruch 20, wenn das Computer-Programm auf einem Computer abläuft.

## Claims

1. Device for detecting a manipulation of an information signal, **characterized in that**
the information signal includes an information signal component having side information and a further information signal component having main information, the side information being linked to the main information, and
**in that** the device comprises:
means (101) for extracting the information signal component having side information and characteristic for the information signal from the information signal;
means (103) for encrypting the extracted information signal component having side information to obtain an encrypted signal; and
means (105) for comparing the encrypted signal to a reference signal, the reference signal being an encrypted representation of a non-manipulated reference signal component having side information of a reference information signal to detect the manipulation.

2. Device according to claim 1, wherein the means (101) for extracting is configured not to filter out the information signal component having main information such that a change of the information signal component having main information is not detectable.

3. Device according to claim 1, wherein the information signal component having side information and the information signal component having main information are arranged in different portions of the information signal, and wherein the means (101) for extracting is configured to extract the portion of the information signal where the information signal component having side information is disposed to obtain the extracted information signal component.

4. Device according to claim 1, wherein a spectrum of the information signal component and a spectrum of the further information signal component comprise different spectral values, and wherein the means (101) for extracting is configured to filter out the spectral values of the information signal component to obtain the information signal component.

5. Device according to one of claims 1 to 4, wherein the information signal is an audio signal, wherein the further information signal component includes audio-spectral values as main information, and wherein the information signal component includes scaling parameters for the audio-spectral values as side information.

6. Device according to one of claims 1 to 4, wherein the information signal is an audio signal, wherein the further information signal component includes audio-spectral values, and wherein the information signal component includes information on a number of the audio-spectral values.

7. Device according to one of claims 1 to 4, wherein the information signal is a video signal, wherein the further information signal component includes video information as main information, and wherein the information signal component includes luminance values for the video information as side information.

8. Device according to one of claims 1 to 7, wherein the means (103) for encrypting is configured to form a hash value or a check sum on the information signal component to obtain the encrypted signal.

9. Device according to one of claims 1 to 8, wherein the information signal further includes the reference signal, wherein the means (101) for extracting is configured to extract the reference signal from the information signal.

10. Device according to claim 9, wherein the means (101) for extracting is configured to select a reference signal associated to the information signal component from a plurality of reference signals.

11. Device according to claim 9 or 10, wherein the reference signal is a hash value or a check sum on the non-manipulated reference signal component.

12. Device according to one of claims 1 to 11, wherein the non-manipulated reference signal component is identical to the original information signal component, and wherein the reference signal is identical to the original information signal.

13. Device for detecting a manipulation of an information signal, **characterized in that**
the information signal includes an information signal component having side information and a further information signal component having main information, the side information being linked to the main information, and
**in that** the device comprises:
means for extracting the information signal component having side information and being characteristic for the information signal from the information signal;
means for decrypting a reference signal, the reference signal being an encrypted representation of a non-manipulated reference signal component having side information of a reference information signal to obtain a decrypted signal, the reference signal comprising a further information signal component having main information, the side information being linked to the main information; and
means for comparing the decrypted signal, which represents decrypted side information of the reference signal, to the information signal component having side information to detect the manipulation of the information signal.

14. Device according to claim 13, wherein the reference signal is a digital signature, generated using a private key, on the information signal component, and wherein the means for decrypting is configured to decrypt the signature by a public key linked to the private key to obtain the decrypted signal.

15. Device for generating an information signal from an input signal, **characterized in that**
the input signal includes an input signal component, which is characteristic for the information signal, and a further input signal component, the further input signal component including main information, and the input signal component including side information linked to the main information, and
**in that** the device comprises:
means for encrypting the input signal component having the side information to obtain a reference signal; and
means for assembling the input signal component having the side information, the further input signal component having the main information, and the reference signal having the side information in an encrypted form to generate the information signal.

16. Device according to claim 15, wherein the means for encrypting is configured to form a hash value or a check sum on the input signal component to obtain the reference signal.

17. Device according to claim 15 or 16, wherein the means for assembling is configured to attach the reference signal to the input signal to generate the information signal.

18. Method for detecting a manipulation of an information signal, **characterized in that**
the information signal includes an information signal component having side information and a further information signal component having main information, the side information being linked to the main information, and
**in that** the method comprises the steps of:
extracting the information signal component having side information and characteristic for the information signal from the information signal;
encrypting the extracted information signal component having side information to obtain an encrypted signal; and
comparing the encrypted signal to a reference signal, the reference signal being an encrypted representation of a non-manipulated reference signal component having side information of a reference information signal to detect the manipulation.

19. Method for detecting a manipulation of an information signal, **characterized in that** the information signal includes an information signal component having side information and a further information signal component having main information, the side information being linked to the main information, and
**in that** the method comprises the steps of:
extracting the information signal component having side information and being characteristic for the information signal from the information signal;
decrypting a reference signal, the reference signal being an encrypted representation of a non-manipulated reference signal component having side information of a reference information signal to obtain a decrypted signal, the reference signal comprising a further information signal component having main information, the side information being linked to the main information; and
comparing the decrypted signal, which represents decrypted side information of the reference signal, to the information signal component having side information to detect the manipulation.

20. Method for generating an information signal from an input signal, **characterized in that**
the input signal includes an input signal component, which is characteristic for the information signal, and a further input signal component, the further input signal component including main information, and the input signal component including side information linked to the main information, and
**in that** the method comprises the steps of:
encrypting the input signal component having the side information to obtain a reference signal; and
assembling the input signal component having the side information, the further input signal component having the main information, and the reference signal having the side information in an encrypted form to generate the information signal.

21. Computer program for performing the method according to claim 18 or the method according to claim 19 or the method according to claim 20 when the computer program runs on a computer.

## Revendications

1. Dispositif pour détecter une manipulation d'un signal d'information, **caractérisé par le fait**
**que** le signal d'information présente une composante de signal d'information avec des informations latérales et une autre composante de signal d'information avec des informations principales, les informations latérales ayant un rapport avec les informations principales, et
**que** le dispositif présente les caractéristiques suivantes:
un moyen (101) destiné à extraire du signal d'information la composante de signal d'information avec des informations latérales qui est caractéristique pour le signal d'information;
un moyen (103) destiné à crypter la composante de signal d'information avec des informations latérales extraite, pour obtenir un signal crypté; et
un moyen (105) destiné à comparer le signal crypté avec un signal de référence, le signal de référence étant une représentation cryptée d'une composante de signal référence non manipulée avec des informations latérales d'un signal d'information de référence, pour détecter la manipulation.

2. Dispositif selon la revendication. 1, dans lequel le moyen (101) destiné à extraire est réalisé pour ne pas éliminer pas filtration la composante de signal d'information avec des informations principales, de sorte qu'une modification de la composante de signal d'information avec des informations principales ne soit pas détectable.

3. Dispositif selon la revendication. 1, dans lequel la composante de signal d'information avec des informations latérales et la composante de signal d'information avec des informations principales sont disposées dans des segments différents du signal d'information, et dans lequel le moyen (101) destiné à extraire est réalisé pour extraire le segment du signal d'information dans lequel est disposée la composante de signal d'information avec des informations latérales, pour obtenir la composante de signal d'information extraite.

4. Dispositif selon la revendication 1, dans lequel un spectre de la composante de signal d'information et un spectre de l'autre composante de signal d'information présentent des valeurs spectrales différentes, et dans lequel le moyen (101) destiné à extraire est réalisé pour sortir par filtration les valeurs spectrales de la composante de signal d'information, pour obtenir la composante de signal d'information.

5. Dispositif selon l'une des revendications 1 à 4, dans lequel le signal d'information est un signal audio, dans lequel l'autre composante de signal d'information comporte, comme informations principales, des valeurs spectrales audio, et dans lequel la composante de signal d'information comporte, comme informations latérales, des paramètres d'échelle pour les valeurs spectrales audio.

6. Dispositif selon l'une des revendications 1 à 4, dans lequel le signal d'information est un signal audio, et dans lequel l'autre composante de signal d'information comporte des valeurs spectrales audio, et dans lequel la composante de signal d'information comporte des informations sur un nombre de valeurs spectrales audio.

7. Dispositif selon l'une des revendications 1 à 4, dans lequel le signal d'information est un signal vidéo, dans lequel l'autre composante de signal d'information comporte, comme informations principales, des informations vidéo, et dans lequel la composante de signal d'information comporte, comme informations latérales, des valeurs de luminance pour l'information vidéo.

8. Dispositif selon l'une des revendications 1 à 7, dans lequel le moyen (103) destiné à crypter est réalisé pour former une valeur de compression ou pour former une somme de contrôle relative à la composante de signal d'information, pour obtenir le signal crypté.

9. Dispositif selon l'une des revendications 1 à 8, dans lequel le signal d'information comporte par ailleurs le signal de référence, dans lequel le moyen (101) destiné à extraire est réalisé pour extraire le signal de référence du signal d'information.

10. Dispositif selon la revendication 9, dans lequel le moyen (101) destiné à extraire est réalisé pour sélectionner un signal de référence qui est associé à la composante de signal d'information parmi une pluralité de signaux de référence.

11. Dispositif selon la revendication 9 ou 10, dans lequel le signal de référence est une valeur de compression ou une somme de contrôle relative à la composante de signal de référence non manipulée.

12. Dispositif selon l'une des revendications 1 à 11, dans lequel la composante de signal de référence non manipulée est identique à la composante de signal d'information originale, et dans lequel le signal de référence est identique au signal d'information original.

13. Dispositif pour détecter une manipulation d'un signal d'information, **caractérisé par le fait**
**que** le signal d'information présente une composante de signal d'information avec des informations latérales et une autre composante de signal d'information avec des informations principales, les informations latérales ayant un rapport avec les informations principales, et
**que** le dispositif présente les caractéristiques suivantes:
un moyen destiné à extraire du signal d'information la composante de signal d'information avec des informations latérales qui est caractéristique pour le signal d'information;
un moyen destiné à décrypter un signal de référence, le signal de référence étant une représentation cryptée d'une composante de signal de référence non manipulée avec des informations latérales d'un signal d'information de référence, pour obtenir un signal décrypté, le signal de référence présentant une autre composante de signal d'information avec des informations principales, les informations latérales ayant un rapport avec les informations principales, et
un moyen destiné à comparer le signal décrypté représentant les informations latérales décryptées du signal de référence avec la composante de signal d'information avec des informations latérales, pour détecter la manipulation du signal d'information.

14. Dispositif selon la revendication 13, dans lequel le signal de référence est une signature numérique générée à l'aide d'une clé privée relative à la composante de signal d'information, et dans lequel le moyen destiné à décrypter est réalisé pour décrypter la signature à l'aide d'une clé publique qui a un rapport avec la clé privée, pour obtenir le signal décrypté.

15. Dispositif pour générer un signal d'information à partir d'un signal d'entrée, **caractérisé par le fait**
**que** le signal d'entrée comporte une composante de signal d'entrée, qui est caractéristique pour le signal d'information, et une autre composante de signal d'entrée, l'autre composante de signal d'entrée comportant des informations principales, et la composante de signal d'entrée comportant des informations latérales qui ont un rapport avec les informations principales, et
**que** le dispositif présente les caractéristiques suivantes:
un moyen destiné à crypter la composante de signal d'entrée qui comporte les informations latérales, pour obtenir un signal de référence; et
un moyen destiné à assembler la composante de signal d'entrée qui comporte les informations latérales, l'autre composante de signal d'entrée qui comporte les informations principales, et le signal de référence qui comporte les informations latérales de forme cryptée, pour générer le signal d'information.

16. Dispositif selon la revendication 15, dans lequel le moyen destiné à crypter est réalisé pour former une valeur de compression ou une somme de contrôle relative à la composante de signal d'entrée, pour obtenir le signal de référence.

17. Dispositif selon la revendication 15 ou 16, dans lequel le moyen destiné à assembler est réalisé pour ajouter le signal de référence au signal d'entrée, pour générer le signal d'information.

18. Procédé pour détecter une manipulation d'un signal d'information, **caractérisé par le fait**
**que** le signal d'information présente une composante de signal d'information avec des informations latérales et une autre composante de signal d'information avec des informations principales, les informations latérales ayant un rapport avec les informations principales, et
**que** le procédé présente les étapes suivantes consistant à:
extraire du signal d'information la composante de signal d'information avec des informations latérales qui est caractéristique pour le signal d'information;
crypter la composante de signal d'information avec des informations latérales extraite, pour obtenir un signal crypté; et comparer le signal crypté avec un signal de référence, le signal de référence étant une représentation cryptée d'une composante de signal de référence non manipulée avec des informations latérales d'un signal d'information de référence, pour détecter la manipulation.

19. Procédé pour détecter une manipulation d'un signal d'information, **caractérisé par le fait**
**que** le signal d'information présente une composante de signal d'information avec des informations latérales et une autre composante de signal d'information avec des informations principales, les informations latérales ayant un rapport avec les informations principales, et
**que** le procédé présente les étapes suivantes consistant à:
extraire du signal d'information la composante de signal d'information avec des informations latérales qui est caractéristique pour le signal d'information;
décrypter un signal de référence, le signal de référence étant une représentation cryptée d'une composante de signal de référence non manipulée avec des informations latérales d'un signal d'information de référence, pour obtenir un signal décrypté, où
le signal de référence présente une autre composante de signal d'information avec des informations principales, les informations latérales ayant un rapport avec les informations principales, et
comparer le signal décrypté qui représente des informations latérales décryptées du signal de référence avec la composante de signal d'information avec des informations latérales, pour détecter la manipulation.

20. Procédé pour générer un signal d'information à partir d'un signal d'entrée, **caractérisé par le fait**
**que** le signal d'entrée comporte une composante de signal d'entrée, qui est caractéristique pour le signal d'information, et une autre composante de signal d'entrée, l'autre composante de signal d'entrée comportant des informations principales, et la composante de signal d'entrée comportant des informations latérales qui ont un rapport avec les informations principales, et
**que** le procédé présente les étapes suivantes consistant à:
crypter la composante de signal d'entrée qui comporte les informations latérales, pour obtenir un signal de référence; et
assembler la composante de signal d'entrée qui comporte les informations latérales, l'autre composante de signal d'entrée qui comporte les informations principales, et le signal de référence qui comporte les informations latérales de forme cryptée, pour générer le signal d'information.

21. Programme d'ordinateur pour réaliser le procédé selon la revendication 18 ou le procédé selon la revendication 19 ou le procédé selon la revendication 20 lorsque le programme d'ordinateur est exécuté sur un ordinateur.
